# EUROPEAN PATENT APPLICATION

(11) **EP 1 873 713 A2**
(43) Date of publication of application: **02.01.2008**
(21) Application number: 07110941.7
(22) Date of filing: 25.06.2007
(51) Int. Cl.: G06T 5/00, G06T 5/40, G06T 5/50, G06T 3/40

(54) **Demosaicing for a colour filter array**

(30) Priority: 26.06.2006 KR 20060057661; 27.10.2006 KR 20060105349
(71) Applicant: Samsung Electro-Mechanics Co., Ltd., Suwon-si, Gyeonggi-do (KR)
(72) Inventor: Sung, Gee-young, Gyeonggi-do (KR); Kim, Sung-su, Gyeonggi-do (KR); Park, Du-sik, Gyeonggi-do (KR); Lee, Ho-young, Gyeonggi-do (KR); Kim, Chang-yeong, Gyeonggi-do (KR)
(74) Representative: Grünecker, Kinkeldey, Stockmair & Schwanhäusser Anwaltssozietät

(57) **Abstract**

Provided are a method and apparatus to restore an image with a high resolution from an image obtained through a miniaturized camera module. The method includes obtaining a plurality of original color-separated images through a camera module including a plurality of lenses and a plurality of image sensing areas corresponding to the lenses, respectively, generating a first intermediate image corresponding to the sensing areas, the first intermediate image being divided into a plurality of pixel groups, generating a second intermediate image by mapping pixel information of pixels at identical positions in respective original color-separated images onto a predetermined pixel of a pixel group in the first intermediate image corresponding to the identical position, and generating a final image by interpolating the second intermediate image. The pixel group includes a plurality of pixels corresponding to an arrangement pattern of color filters.

## Description

### CROSS-REFERENCE TO RELATED APPLICATIONS

This application claims priority from Korean Patent Application Nos. 10-2006-0057661 and 10-2006-0105349 filed on June 26, 2006 and October 27, 2006 respectively, in the Korean Intellectual Property Office, the disclosures of which are incorporated herein by reference in their entireties.

### BACKGROUND OF THE INVENTION

### 1. Field of the Invention

The present invention relates to a method of restoring an image, and more particularly, to a method of restoring an image with a high resolution from an image obtained through a miniaturized camera module.

### 2. Description of the Related Art

Digital apparatuses including a camera module with a high resolution, such as a digital camera and a camera phone, are being widely used. Generally, a camera module is composed of a lens and an image sensor. The lens concentrates light reflected from an object and the image sensor detects and recognizes the light concentrated by the lens and converts the light into an electric image signal. Image sensors can be categorized into image pickup tubes and solid-state image sensors, and representative examples of the solid-state image sensor include a charge coupled device (CCD) and a metal oxide silicon (MOS) device.

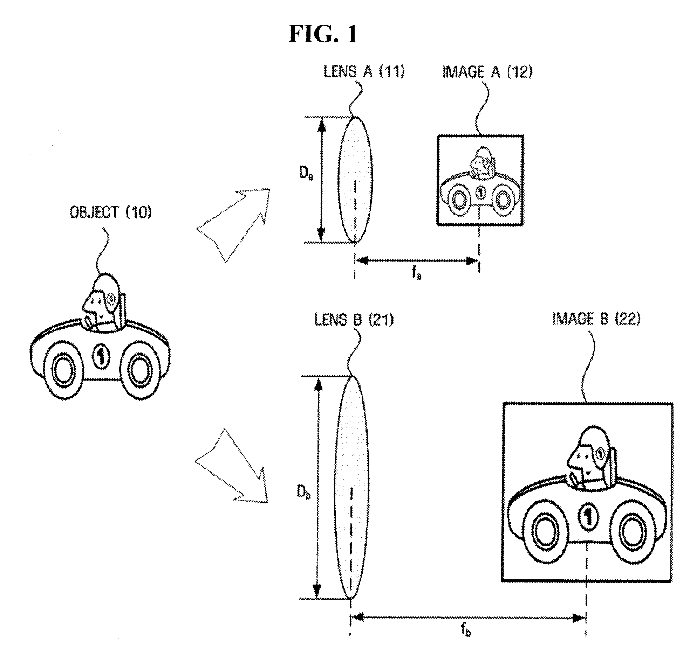

FIG. 1 illustrates an operating principle of a conventional camera module.

In a camera module, the bigger the relative aperture, the brighter the obtained image of an object 10, the bigger the F number (F/#), and the clearer and cleaner the obtained image. Here, the relative aperture is a value obtained by dividing the aperture D of a lens (i.e., lens A (11) or lens B (12)) by the focal length f, i.e., D/f, and the brightness of an image (i.e., image A (12) or image B (22)) is in proportion to the square of the relative aperture. Meanwhile, the F number is the reciprocal of the relative aperture, i.e., f/D. The bigger the F number, the less the quantity of light per unit area that arrives at an image sensor of the camera module. The smaller the F number, the greater the quantity of light per unit area that arrives at the image sensor, such that a bright image with a high resolution can be obtained.

As illustrated in FIG. 1, the bigger the aperture of a lens, the higher the resolution. However, despite this advantage, the focal length also becomes longer, thus constraining miniaturization of the camera module. Conversely, if the aperture of a lens is small, the focal length to form an image of an object also decreases. Accordingly, though the camera module can be miniaturized, it is difficult to obtain an image with a high resolution.

In order to solve this problem, many inventions, for example, Korean Patent Laid-Open Application No. 2003-0084343, have been suggested, but the problem has not been solved yet.

### SUMMARY OF THE INVENTION

Accordingly, it is an aspect of the present invention to provide a method of restoring an image with a high resolution from an image with a low resolution obtained through a miniaturized camera module.

Additional aspects and/or advantages of the invention will be set forth in part in the description which follows and, in part, will be apparent from the description, or may be learned by practice of the invention.

The foregoing and/or other aspects are achieved by providing a method of restoring an image comprising obtaining a plurality of original color-separated images through a camera module including a plurality of lenses and a plurality of image sensing areas corresponding to the lenses, respectively; generating a first intermediate image corresponding to the sensing areas; dividing the first intermediate image into a plurality of pixel groups; generating a second intermediate image comprising mapping pixel information of pixels at identical positions in respective ones of the original color-separated images, onto a predetermined pixel of a pixel group in the first intermediate image corresponding to the respective identical position; and generating a final image comparing interpolating the second intermediate image, wherein each of the pixel groups comprises a plurality of pixels corresponding to an arrangement pattern of color filters.

The foregoing and/or other aspects of the present invention are also achieved by providing a method of restoring an image comprising: obtaining a plurality of original color-separated images through a camera module including a plurality of lenses and a plurality of image sensing areas corresponding to the lenses, respectively; generating an intermediate image comprising rearranging pixel information of pixels at identical positions in the respective original color-separated images, according to an arrangement pattern of color filters of the camera module; and generating a final image comprising demosaicing the intermediate image.

According to still another aspect of the present invention, there is provided an apparatus to restore an image including a camera module; an input module receiving a plurality of original color-separated images obtained through the camera module, the camera module including a plurality of lenses and a plurality of image sensing areas corresponding to the lenses, respectively, an intermediate image generation module generating a first intermediate image corresponding to the image sensing areas and divided into a plurality of pixel groups, and generating a second intermediate image by mapping pixel information of pixels at identical positions in respective original color-separated images, onto a predetermined one of the pixels of the pixel group in the first intermediate image corresponding to the identical positions, a final image generation module generating a final image by interpolating the second intermediate image; and a color filter, wherein each of the pixel groups comprises a plurality of pixels corresponding to an arrangement pattern of color filters.

According to a further aspect of the present invention, there is provided an apparatus to restore an image including an input module receiving a plurality of original color-separated images through a camera module, the camera module including a plurality of lenses and a plurality of image sensing areas corresponding to the lenses, respectively, color filters; an image generation module generating an intermediate image by rearranging pixel information of pixels at identical positions in the respective original color-separated images, according to an arrangement pattern of the color filters, and a final image generation module generating a final image by demosaicing the intermediate image.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates an operating principle of a conventional camera module;
FIG. 2 is a block diagram illustrating a structure of an apparatus for restoring an image according to an embodiment of the present invention;
FIG. 3 is a perspective view illustrating an internal structure of a camera module according to an embodiment of the present invention;
FIGS. 4A through 4C are diagrams illustrating a variety of embodiments of the structure of a filter unit of FIG. 3 according to an embodiment of the present invention;
FIG. 5 illustrates a process of processing the filter unit of FIG. 3 according to an embodiment of the present invention;
FIG. 6 is a sectional view of a unit pixel used to form an image sensor unit of FIG. 3 according to an embodiment of the present invention;
FIGS. 7A and 7B illustrate the degree of convergence of slantingly incident light rays on a micro lens of FIG. 6 with respect to the distance between the micro lens and a photo detector according to an embodiment of the present invention;
FIG. 8 illustrates original images formed at a plurality of sub sensing areas shown in FIG. 3;
FIGS. 9A and 9B illustrate a method of restoring an image detector according to an embodiment of the present invention;
FIGS. 10A and 10B illustrate a specific exemplary operation of generating a final image (S840) shown in FIG. 9A;
FIGS. 11A and 11 B illustrate other specific exemplary operations of generating a final image (S840) shown in FIG. 9A; and
FIG. 12 is a perspective view illustrating an internal structure of a camera module according to another embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

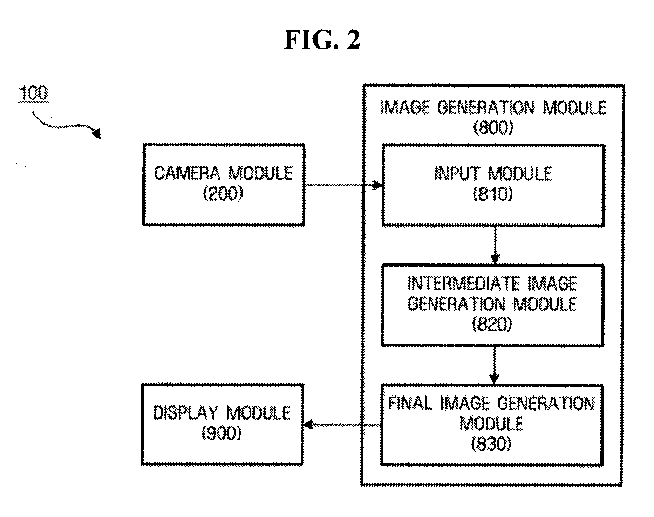

FIG. 2 is a block diagram illustrating a structure of an apparatus 100 restoring an image according to an embodiment of the present invention. The apparatus 100 restoring an image of FIG. 2 is composed of a camera module 200 concentrating incident light and generating a plurality of original color-separated images; an image generation module 800 generating a final image based on the original color-separated images provided from the camera module 200, and a display module 900 displaying the final image provided from the image generation module 800.

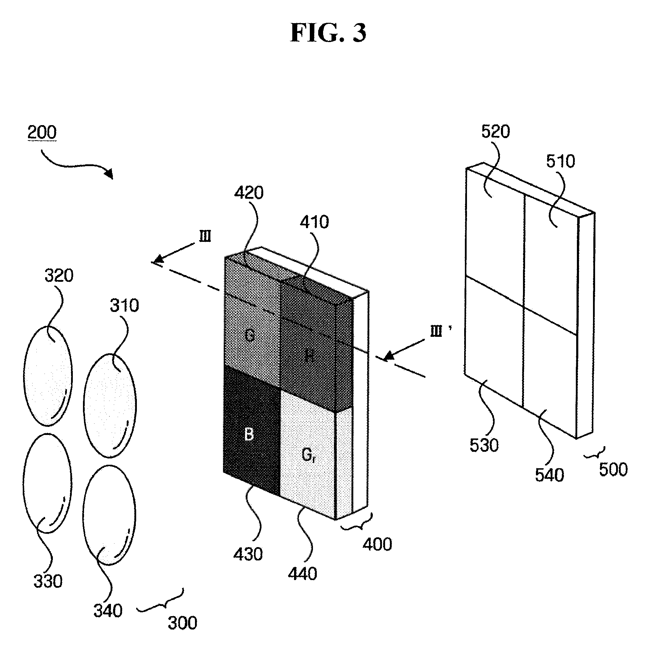

First, the camera module 200 will now be explained with reference to FIGS. 3 through 7B.

FIG. 3 is a perspective view illustrating a structure of a camera module according to an embodiment of the present invention. The camera module 200 of FIG. 3 is composed of a lens unit 300, a filter unit 400 and an image sensor unit 500.

The lens unit 300 may include a plurality of lenses 310 through 340 concentrating incident light. Here, the number of lenses is not restricted and the plurality of lenses 310 through 340 may be arranged co-planarly in a variety of arrangements. For example, the plurality of lenses may be arranged as a line in the width direction or in the length direction, or in the form of a width × height matrix. Hereinafter, for convenience of explanation, an embodiment in which the lens unit 300 includes 4 lenses that are arranged in the form of a 2 × 2 (width × height) matrix will be explained.

Alternatively, the plurality of lenses 310 through 340 may be arranged at identical positions or different positions. For example, if the respective lenses 310 through 340 are all arranged at a reference position, the positions of the respective lenses 310 through 340 are considered as being identical with each other. Here, the reference position refers to the center of sub filtering areas corresponding to a predetermined lens. On the other hand, the respective lenses 310 through 340 may be arranged such that the first lens 310 is shifted right one pixel from the reference position, the second lens 320 is positioned at the reference position, the third lens 330 is shifted downward one pixel from the reference position, and the fourth lens 340 is shifted diagonally one pixel from the reference position, that is, each one pixel in the right and downward directions from the reference position.

The filter unit 400 filters the light concentrated by the plurality of lenses 310 through 340 and implements the light as original basic colors. For this purpose, the filter unit 400 may be composed of a plurality of sub filtering areas 410 through 440 corresponding to the plurality of lenses 310 through 340 and in which color filters having different colors are formed. For example, as described above, in the case where the lens unit 300 includes 4 lenses arranged in the form of a 2 × 2 matrix, the filter unit 400 has a first sub filtering area 410, a second sub filtering area 430, a third sub filtering area 430 and a fourth sub filtering area 440, the sub filtering areas 400 through 440 being arranged in a 2 × 2 form.

Also, the filtering areas may be divided into a first filtering area 410, 420, and 430 and a second filtering area 440 with respect to the transmittance of a color filter formed in each sub filtering area. Here, the first filtering area may include a plurality of sub filtering areas. Meanwhile, the second filtering area includes a single sub filtering area.

According to an embodiment of the present invention, in the sub filtering area corresponding to the second filtering area, a color filter having a transmittance higher than those of the color filters formed in the sub filtering areas corresponding to the first filtering area may be formed. For example, red, green, and blue color filters may be formed in the first through third sub filtering areas 410 through 430, respectively. Meanwhile, in the fourth sub filtering area 440 included in the second filtering area a filter of a color having a transmittance higher than those of red, green and blue, for example, a gray color filter, may be formed. In the example described above, the transmittance becomes higher in order of blue, red, and green color filters, and the gray color filter has a higher transmittance than that of the green color filter.

In another embodiment, a color filter of a color other than gray may be formed in the fourth sub filtering area 440. For example, a color filter of any one of white (no color filter), yellow, cyan and magenta may be formed. However, the color of a color filter formed in the fourth sub filtering area is not limited to these examples and a color filter of any color that has a higher transmittance than those of the color filters formed in the sub filtering areas of the first filtering area can be regarded to be included in the scope of the present invention.

Thus, if in the sub filtering area corresponding to the second filtering area 440, a color filter is formed which has a transmittance higher than those of the color filters formed in the sub filtering areas 410 through 430 corresponding to the first filtering area, the quantities of light passing through the respective sub filtering areas become different. This means that differences occur in the quantity of light arriving at the image sensor unit 500, which will be explained later, and that a high sensitivity sensing function and a low sensitivity sensing function can be implemented at the same time in the sensor unit 500.

More specifically, sensing areas 510 through 540 of the image sensor unit 500 can be divided into a plurality of sub sensing areas 510 through 540 corresponding to the plurality of sub filtering areas 410 through 440, respectively. Meanwhile, the quantity of light arriving at the sub sensing area corresponding to the sub filtering area included in the second filtering area, among the plurality of sub sensing areas 510 through 540, is larger than the quantity of light arriving at a sub sensing area corresponding to a sub filtering area 410, 420 or 430 included in the first filtering area. Accordingly, it can be said that the sub sensing area corresponding to the sub filtering area included in the second filtering area has a sensing function of a relatively higher sensitivity than that of a sensing function of a sub sensing area corresponding to a sub filtering area 410, 420 or 430 included in the first filtering area.

In the example described above, the sensing area of the image sensor unit 500 can be divided into the first through fourth sub sensing areas 510 through 540 corresponding to the first through fourth sub filtering areas 410 through 440, respectively. The quantity of light arriving at the fourth sub sensing area 540 is larger than that arriving at the first sub sensing area 510. This is because the gray color filter is formed in the fourth sub filtering area 440 corresponding to the fourth sensing area 540 and the red color filter having a lower transmittance than that of the gray color filter is formed in the first sub filtering area 410 corresponding to the first sub sensing area 510. Accordingly, the fourth sub sensing area 540 has a sensing function with a relatively higher sensitivity than that of the sensing function of the first sub sensing area 510. Likewise, because the quantity of light arriving at the second sub sensing area 520 is smaller than that arriving at the fourth sub sensing area 540 and the quantity of light arriving at the third sub sensing area 530 is also smaller than that arriving at the fourth sub sensing area 540, it can be said that each of the second and third sub sensing areas 520 and 530 has a sensing function with a lower sensitivity than that of the sensing function of the fourth sub sensing area 540.

In addition to the elements described above, in order to block light of a predetermined wavelength, for example, infrared rays, the filter unit 400 may selectively include an infrared ray blocking filter 460. The infrared ray blocking filter 460 blocks infrared rays arriving at the image sensor and prevents image information in the visible ray region from being damaged. That is, the sensitivity of an image sensor also responds to an infrared ray, and if the infrared blocking filter 460 is used, the infrared rays are blocked such that possible damage to the image information in the visible ray region can be prevented. According to the structure of the conventional image sensor, color filters and an infrared ray blocking filter cannot be implemented in an integrated form, but according to the embodiments of the present invention, a color filter 470 and the infrared ray blocking filter 460 can be manufactured in an integrated form. The color filter layer 470 is divided into areas according to color, i.e., 470G and 470R.

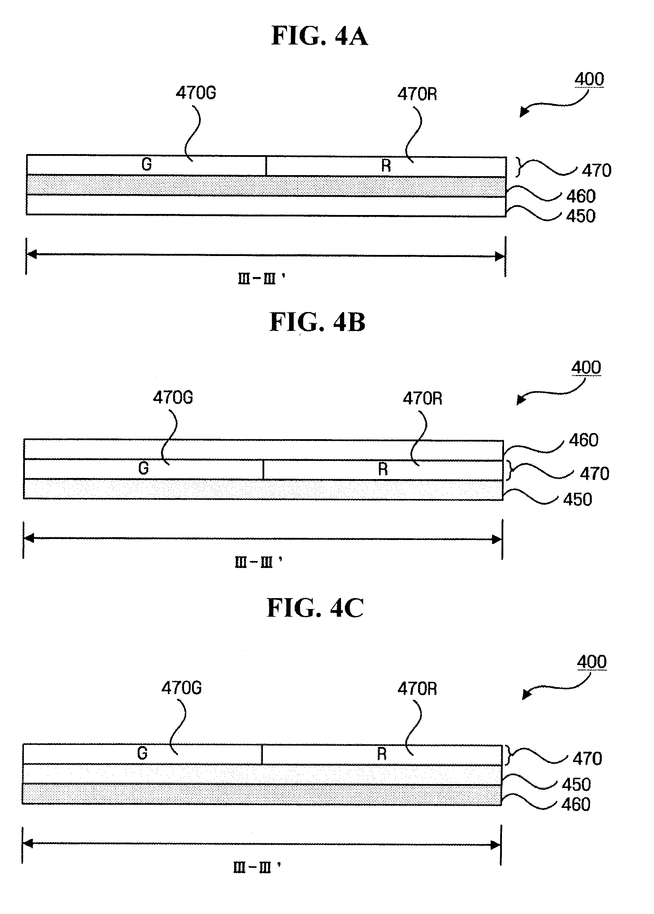

The infrared ray blocking filter 460 may be disposed between a substrate 450 and the color filter layer 470 or on the top part of the color filter layer 470. Also, if the color filter layer 470 is formed on one surface of the substrate 450, the infrared ray blocking filter 460 may be formed on the other surface of the substrate 450. FIGS. 4A through 4C are sectional diagrams obtained by cutting the filter unit 400 of FIG. 3 along the cutting plane line III-III', and illustrating a variety of embodiments of the position for forming the color filter 470 and the infrared ray blocking filter 460. FIG. 4A illustrates that the infrared ray blocking filter 460 and the color filter 470 are sequentially formed on one surface of the substrate 450. FIG. 4B illustrates that the color filter 470 and the infrared ray blocking filter 460 are sequentially formed on one surface of the substrate 450. FIG. 4C illustrates that the color filter 470 is formed on one surface of the substrate 450 and that the infrared ray blocking filter 460 is formed on the other surface of the substrate 450.

Meanwhile, the filter unit 400 described above may be manufactured by dividing a plurality of substrates in which different color filters are formed in respective substrates, into a plurality of sub substrates, and then combining each sub substrate having different color filters.

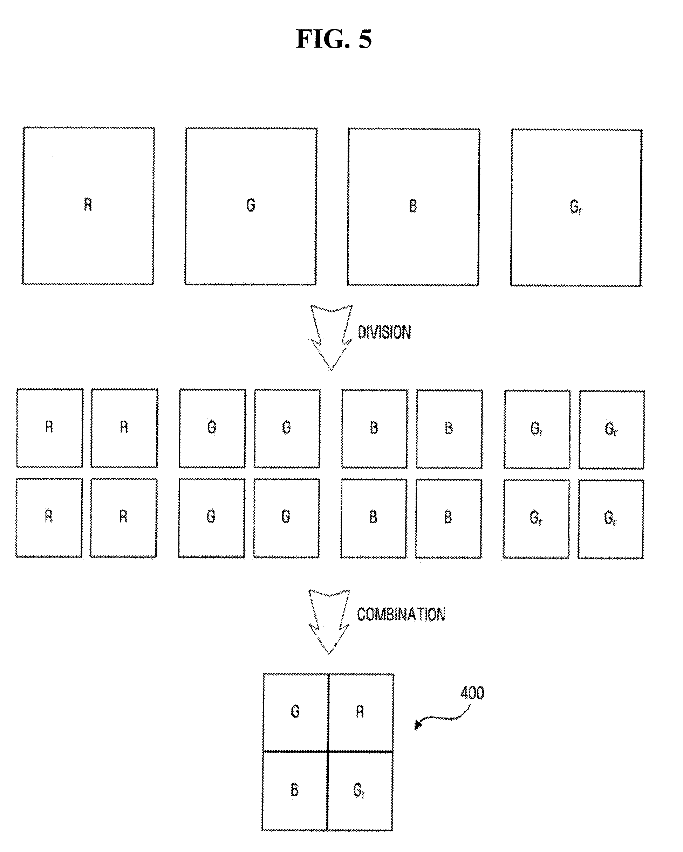

FIG. 5 illustrates a process of processing the filter unit 400 according to an embodiment of the present invention. For example, in order to form the filter unit with a structure illustrated in FIG. 4C, first, the infrared ray blocking filter 460 layer is formed on one surface of each of first through fourth substrates. Then, red, green, blue and gray color filters are coated on the other side of the first through fourth substrates, respectively, in order to form the color filter layer 470. Then, each substrate is quadrisected to make 4 sub substrates. By combining sub substrates in which different color filters are formed, the filter unit 400 having a structure as illustrated in FIG. 4C is formed. According to the process described above, a process of patterning the color filter is omitted such that the quantity of ink to be used to form the color filter can be reduced.

Meanwhile, the image sensor unit 500 senses light passing through the respective sub filtering areas 410 through 440 and converts the light into an electric signal. For this purpose, the image sensor unit 500 is composed of a light sensing unit (not shown) sensing the light passing through the respective sub filtering areas 410 through 440, and a circuit unit (not shown) converting the light sensed by the light sensing unit into an electric signal to generate data.

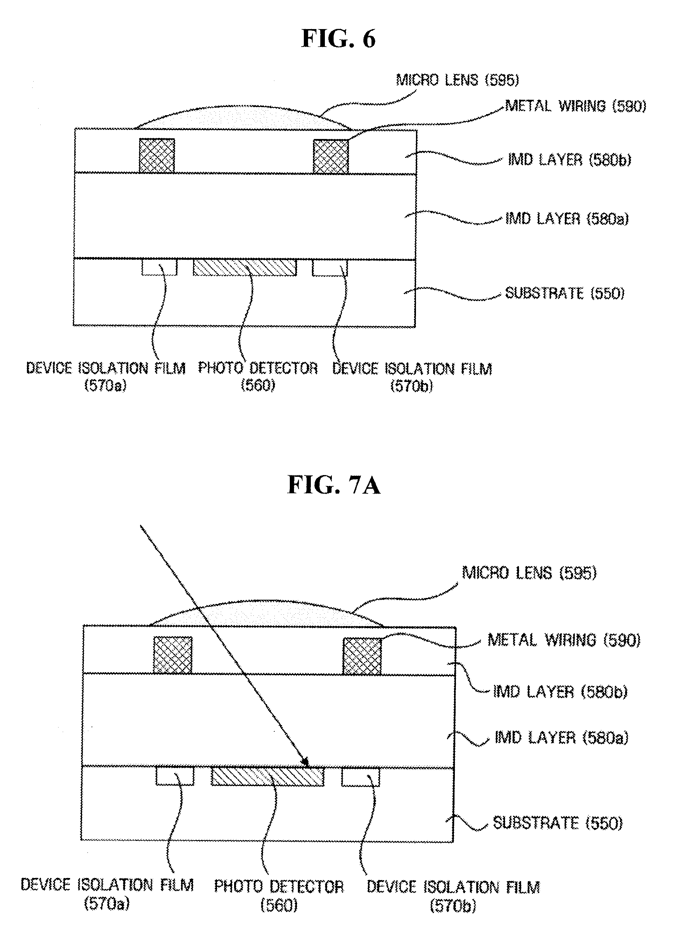

Here, the image sensor unit 500 will now be explained in more detail with reference to FIG. 6. FIG. 6 is a sectional view of a unit pixel used to form the image sensor unit 500 according to an embodiment of the present invention.

Referring to FIG. 6, a photo detector 560, for example, a photo diode (PD), is formed on a substrate 550. A device isolation film 570a, 570b is formed between each PD.

A metal wiring layer 590 to form a circuit unit is formed on top of the photo detector 560. Also, an inter-metal dielectric (IMD) layer 580a is formed between the photo detector 560 and the metal wiring layer 590 and the metal wiring layer 590 may be designed not to block the path of light incident on the photo detector 560. Though FIG. 6 illustrates that one layer of the metal wiring layer 590 is formed, a plurality of the metal wiring layers 590 may be formed when necessary. Then, an IMD layer 580b is formed on each metal wiring layer 590 in order to insulate the metal wiring layer 590.

A micro lens (ML) 595 to increase photo sensitivity of the photo detector 560 is formed on top of the highest IMD layer 580b. Generally, the photo detector 560 does not occupy the entire area of a unit pixel area, but occupies a predetermined part of the unit pixel area. Accordingly, a fill factor, i.e., a ratio of an area occupied by the photo detector 560 to the entire unit pixel area, is a value less than 1, and this means that part of incident light is lost. However, if the ML 595 is formed on the top of the IMD layer 580b, incident light rays are concentrated by the ML 595 such that the quantity of light converged on the photo detector 560 can be increased.

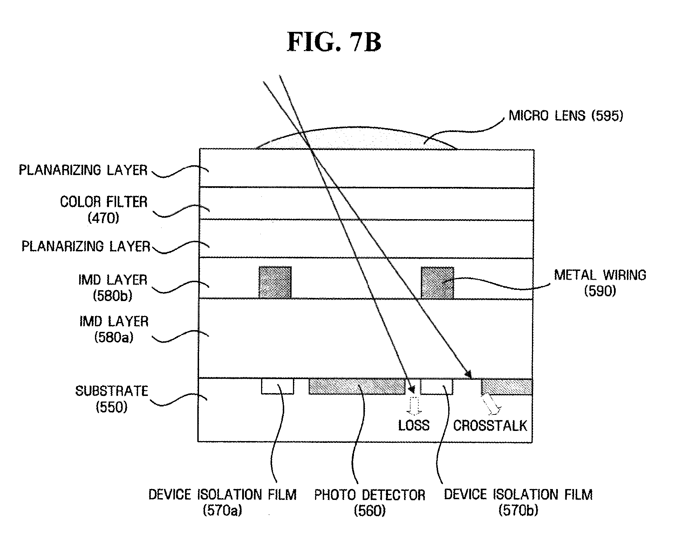

In addition, unlike the conventional technology, the color filter layer 470 and a planarizing layer (Refer to FIG. 7B) are not formed in the image sensor unit 500 of the structure described above, and therefore light loss and crosstalk are decreased. This will be explained in more detail with reference to FIGS. 7A and 7B.

FIGS. 7A and 7B illustrate the degree of convergence of slantingly incident light rays on the ML 595 of FIG. 6 with respect to the distance between the ML 595 and the photo detector 560. Here, FIG. 7A is a sectional view of a unit pixel in an image sensor according to an embodiment of the present invention, while FIG. 7B is a sectional view of a unit pixel in an image sensor according to the conventional technology.

Referring to FIG. 7B, generally, the position of the focus of the ML 595 is fixed to the position of the photo detector 560, and in this case, all the light rays perpendicularly incident on the ML 595 are converged on the photo detector 560. However, light rays slantingly incident on the ML 595 are not all converged on the photo detector 560 and some light rays are lost or incident on photo detectors 560 of adjacent pixels, such that crosstalk is caused. However, if the color filter layer 470 and the planarizing layer are removed, like in the embodiments of the present invention, the interval between the ML 595 and the photo detector 560 becomes narrower, and even the light rays slantingly incident on the ML 595 are converged on the photo detector 560 of the corresponding pixel.

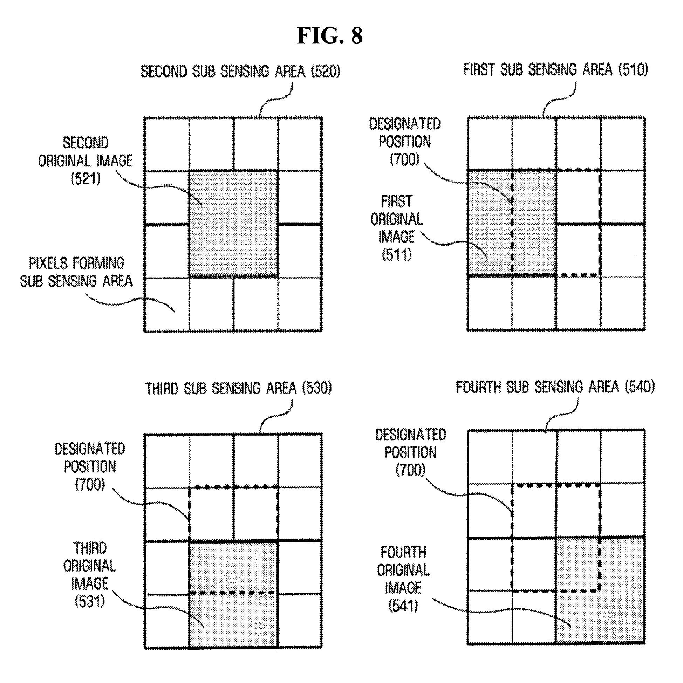

A plurality of pixels each having the structure described above form the sensing areas 510 through 540. Here, the sensing areas can be divided into the plurality of sub sensing areas 510 through 540 corresponding to the sub filtering areas, respectively, of the filter unit 400 described above. That is, according to the example described above, the sensing areas 510 through 540 of the image sensor unit 500 can be divided into the first through fourth sub sensing areas 510 through 540 corresponding to the first through fourth sub filtering areas 410 through 440, respectively. The first sensing area 510 senses light passing through the red color filter, the second sensing area 520 senses light passing through the green color filter, the third sensing area 530 senses light passing through the blue color filter, and the fourth sensing area 540 senses light passing through the gray color filter. As a result, a plurality of original images 511 through 541 of FIG. 8B can be obtained.

Meanwhile, the sensing area divided into a plurality of sub sensing areas 510 through 540 can be divided into a low sensitivity sensing area and a high sensitivity sensing area with respect to photo sensitivity. The low sensitivity sensing area and the high sensitivity sensing area are divided with respect to the quantity of light arriving at each sub sensing area. Meanwhile, the quantity of light arriving at each sub sensing area varies depending on a color filter formed in the sub filtering area corresponding to each sub sensing area. Accordingly, among the filtering areas divided into the first and second filtering areas with respect to the transmittance of a color filter, the sensing area corresponding to the first filtering area and the sensing area corresponding to the second filtering area can be classified as the low sensitivity sensing area and the high sensitivity sensing area, respectively.

More specifically, in the example described above, the first through third sub sensing areas 510 through 530 correspond to the low sensitivity sensing area and the fourth sub sensing area 540 corresponds to the high sensitivity sensing area. This is because the gray color filter formed in the fourth sub filtering area 440 has a higher transmittance than that of each of the red, green, and blue color filters formed in the first through third sub filtering areas 410 through 430, respectively, and therefore, the quantity of light arriving at the fourth sub sensing area 540 is larger than that of each of the first through third sub sensing areas 510 through 530.

Thus, if the low sensitivity sensing area and the high sensitivity sensing area are implemented in the image sensor unit 500, the image generation module 800, which will be explained later, can restore an image by using luminance information (Y') obtained from the high sensitivity sensing area and the low sensitivity sensing area. Accordingly, even in an environment in which illumination differences are big, a clear image can be obtained. That is, a wide dynamic range (WDR) function can be implemented.

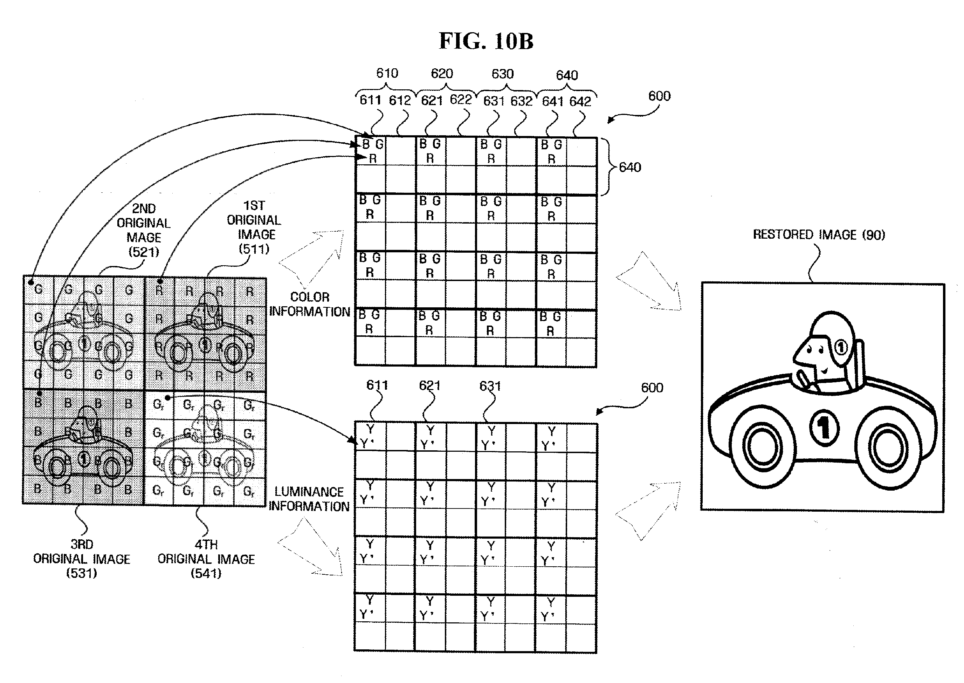

Referring again to FIG. 2, the image generation module 800 receives the plurality of the original color-separated images 511, 521, 531, and 541 from the camera module 200, and generates a final image on the display module 900 of FIG. 10B. For this purpose, the image generation module is composed of an input module 810, an intermediate image generation module 820, and a final image generation module 830.

The input module 810 receives the input of the plurality of the original images 511, 521, 531 and 541 provided from the camera module 200. That is, the input module 810 receives a red image obtained by the first sub sensing area 510, a green image obtained by the second sub sensing area 520, a blue image obtained by the third sub sensing area 530, and a gray image obtained by the fourth sub sensing area 540. The red, green and blue images provide color information required for generating the final image on the display module900 through the final image generation module 830, which will be explained later. Meanwhile, the gray image provides luminance information required for generating the final image on the display module 900.

Alternatively, when the plurality of the original images 511, 521, 531 and 541 provided from the camera module 200 have non-uniform sensitivity levels, the input module 810 may adjust the sensitivity levels of the remaining original images based on the sensitivity of a particular original image. For example, the input module 810 may adjust the sensitivity levels of the respective original images based on the minimum sensitivity level. In more detail, assuming that the first through fourth original images 511, 521, 531 and 541 have sensitivity levels of 5, 7, 10, and 9, respectively, the input module 810 adjusts the sensitivity levels of the remaining original images to 5, based on the sensitivity level of the first original image 511.

Meanwhile, even if the respective lenses 310 through 340 are at fixed positions in the camera module 200, the positions thereof may not be aligned with their designated positions due to external shocks or the like. Such misalignment of the respective lenses 310 through 340 makes the original images 511, 521, 531 and 541 deviate from their designated positions on the respective sub sensing areas 510, 520, 530 and 540, respectively, thereby making it difficult to attaining a clean and clear image. Accordingly, it is necessary to correct optical misalignment, which may cause the original images 511, 521, 531 and 541 to be formed on positions misaligned with their designated positions.

When the positions of the formed original images 511, 521, 531 and 541 are not identical with their designated positions, the input module 810 corrects the misalignment in positions of the original images 511, 521, 531 and 541. In detail, when light rays reflected from a predetermined object reach the sub sensing areas 510, 520, 530, and 540 through the lens unit 200 and the filter unit 300, the original images 511, 521, 531, and 541 are formed on the respective sub sensing areas 510, 520, 530, and 540 corresponding to the respective lenses 310, 320, 330, and 340, respectively. Here, the input module 810 checks the positions of the respective original images 511, 521, 531, and 541 formed on the sub sensing areas 510, 520, 530, and 540 and corrects the misalignment in positions, which is explained in greater detail with reference to FIG. 8.

FIG. 8 illustrates original images formed at the plurality of sub sensing areas.

Referring to FIG. 8, while the position of the second original image 521 is the same as a designated position 700, the first original image 511 is shifted left one pixel from the designated position 700. The third original image 531 is shifted downward one pixel from the designated position 700, and the fourth original image 541 is shifted diagonally one pixel from the designated position 700, that is, each one pixel in the right and downward directions from the designated position 700.

In this case, the input module 810 shifts the first original image 511 one pixel in the right direction as a whole and then shifts the third original image 531 one pixel in an upward direction as a whole, thereby correcting optically misaligned positions of the original images 511 and 531 so that the original images 511 and 531 are normally positioned at their designated positions. In this way, the input module 810 shifts the fourth original image 541 one pixel in an upward direction as a whole and then shifts the fourth original image 541 one pixel in the left direction as a whole, thereby correcting optically misaligned positions of the fourth original images 541 so that the fourth original mage 541 is normally positioned at its designated position.

The original images 511, 521, 531, and 541 are provided to the intermediate image generation module 820, which will be explained later.

The intermediate image generation module 820 rearranges pixel information of pixels at identical positions at the respective original images 511, 521, 531, and 541 provided from the input module 810, so that an intermediate image having a higher resolution than that of the original image for each color can be generated. At this time, the intermediate image may have the same resolution as that of the sensing area 510, 520, 530, and 540. For example, if each sub sensing area of the image sensor unit 500 described above has a resolution of 4 × 4, the intermediate image may have a resolution of 8 × 8, which is the same as that of the entire sensing area 510, 520, 530, and 540. The intermediate image is provided to the final image generation module 830, which will be explained later.

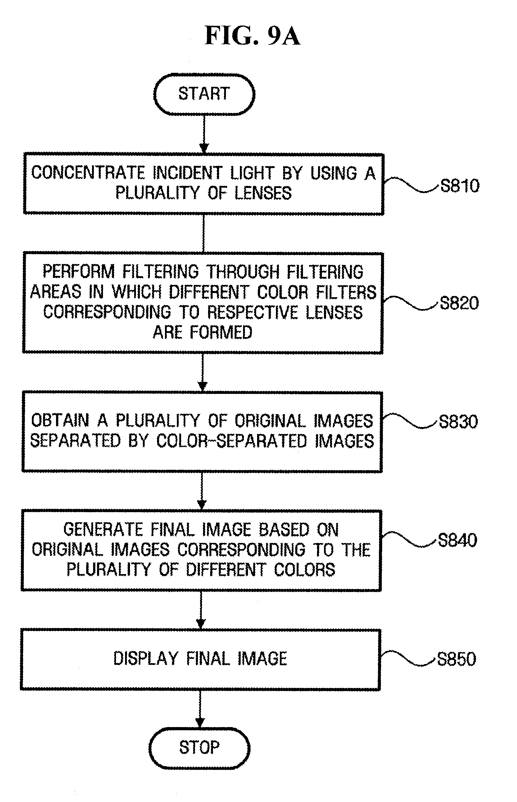

Based on the intermediate image received from the intermediate image generation module 820, the final image generation unit 830 generates the final image 90. More specific details about the generation of the intermediate image and the final image will be explained later with reference to FIGS. 9A through 11B.

The display module 900 displays the final image provided from the final image generation module 830. This display module 900 can be implemented in the form of, for example, a flat-panel display or a touch screen, but is not limited to these forms.

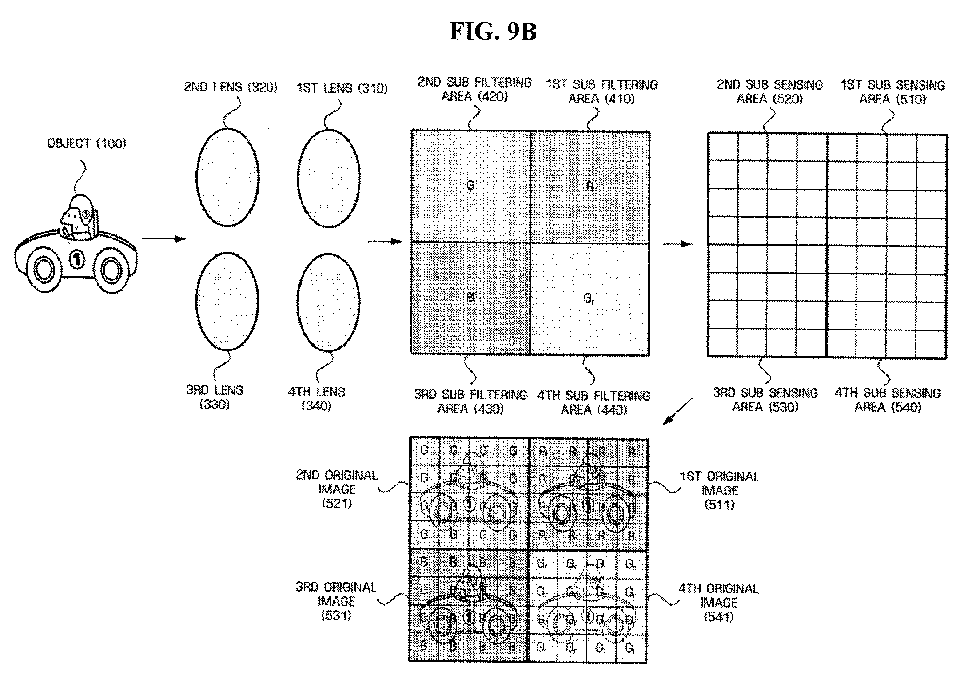

Next, a method of restoring an image according to an embodiment of the present invention will now be explained with reference to FIGS. 9A and 9B. FIG. 9A is a flowchart illustrating a method of restoring an image according to the embodiment of the present invention, and FIG. 9B illustrates a process of obtaining the plurality of original images 511, 521, 531, and 541 through the camera module 200.

For convenience of explanation, it is assumed that red, green, blue, and gray filters are formed in the first through fourth sub filtering areas 410 through 440, respectively. Also, it is assumed that the sensing area 510, 520, 530, and 540 of the image sensor unit 500 is formed with 8 × 8 pixels (width × height) and each sub sensing area 510, 520, 530, and 540 is formed with 4 × 4 pixels (width × height).

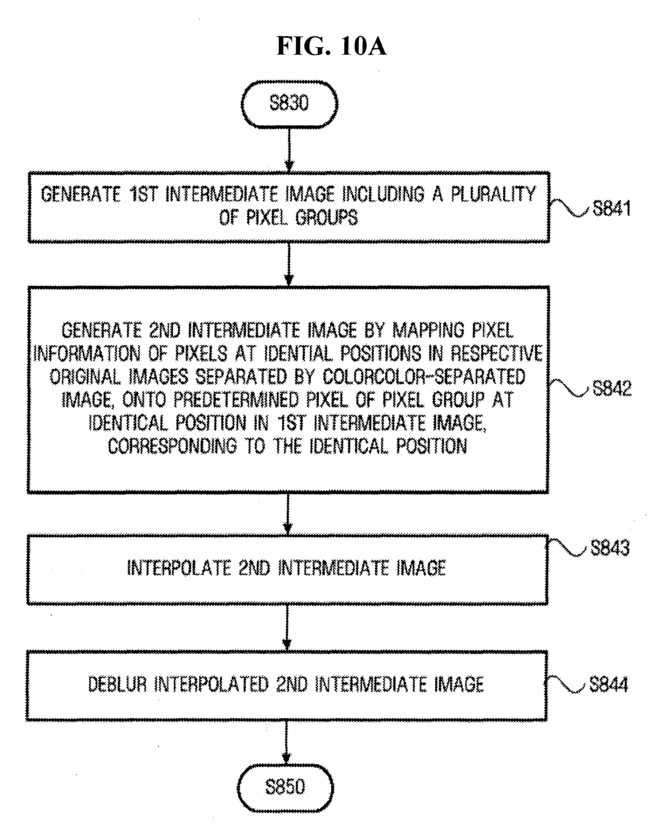

First, light rays reflected from a predetermined object 10 are concentrated through four lenses 310, 320, 330, and 340 in operation S810. The light rays concentrated through lenses 310, 320, 330, and 340 are transmitted through the sub filtering areas 410, 420, 430, and 440, respectively, which correspond to the lenses 310, 320, 330 and 340. The light rays transmitting through the sub filtering areas 410, 420, 430, and 440, are converged on the sub sensing areas 510, 520, 530, and 540, respectively, which correspond to the sub filtering areas 410, 420, 430, and 440. As a result, the plurality of the original images 511, 521, 531, and 541 are obtained through the respective sub sensing areas 510, 520, 530, and 540 in operation S830, after being filtered in operation S820. The image obtained by each sub sensing area 510, 520, 530, and 540 has a resolution that is a fourth the resolution of the entire sensing area 510, 520, 530, and 540. That is, because the resolution of the entire sensing area 511, 521, 531, and 541 is 8 × 8, each of the plurality of the original images 511, 521, 531 and 541 has a resolution of 4×4. In operation S830, when the plurality of original images have non-uniform sensitivity levels, the obtaining of the original images may comprise correcting the non-uniformity in sensitivity of the original images based on the sensitivity of a particular original image from among the plurality of original images, the particular original image having the lowest sensitivity level. And also, in operation S830, when the positions of the original images 511, 521, 531 and 541 are not identical with their designated positions, the obtaining of the original images may comprise correcting the misalignment in positions of the original images 511, 521, 531 and 541. Then, based on the plurality of the original images, the image generation module 800 generates the final image 90 having a resolution higher than that of each of the original images 511, 521, 531, and 541 in operation S840. More specific details about the generation of the final image will be explained later with reference to FIGS. 10A through 11 B.

The final image 90 generated by the image generation module 800 is displayed through the display module 900 in operation S850.

Next, the operation of generating the final image according to the embodiment of the present invention will be explained with reference to FIGS. 10A and 10B. Here, FIG. 10A is a flowchart illustrating in more detail the operation of generating the final image according to the embodiment of the present invention, and FIG. 10B illustrates a process of generating the final image illustrated in FIG. 10A.

The process of generating the final image according to the embodiment of the present invention can be applied to a case when the plurality of lenses 310 through 340 of the lens unit 330 are all present at reference positions.

First, if the plurality of the original images 511, 521, 531 and 541 are provided by the camera module 200, the intermediate image generation module 820 generates a first intermediate image having a resolution corresponding to the sensing area 510, 520, 530 and 540. For example, the first intermediate image having the same resolution as that of the sensing area as illustrated in FIG. 10B is generated in operation S841. Here, the first intermediate image can be divided into a plurality of pixel groups 610, 620, 630, and 640 including a plurality of pixels corresponding to the arrangement pattern of the color filter. For example, the first intermediate image can be divided into a plurality of pixel groups 610, 620, 630, and640, each pixel group formed of 2 × 2 virtual pixels (width × height). Here, in each pixel group 610, 620, 630, and 640, pixels can be divided into main pixels 611, 621, 631, and 641 onto which color and luminance information is mapped, and sub pixels 612, 622, 632, and 642 positioned in the vicinity of the main pixels 611, 621, 631, and 641 and having no information.

The position of a main pixel may be set to a variety of positions in each pixel group. For example, in each pixel group formed of 2 × 2 pixels as illustrated in FIG. 10B, the position corresponding to the first row and the first column may be determined as the position of the main pixel. As another example, the position corresponding to the first row and the second column in each pixel group may be determined as the position of the main pixel.

Thus, if the first intermediate image is generated, the intermediate image generation module 820 maps pixel information of pixels at identical positions in the respective original color-separated images, onto the main pixel of the pixel group corresponding to the identical positions. For example, the intermediate image generation module 820 maps the pixel information of pixels at the first row and the first column of the respective original color-separated images, onto the main pixel 611 of the pixel group 610 positioned at the first row and the first column in the first intermediate image. Likewise, the intermediate image generation module 820 maps the pixel information of pixels at the first row and the first column of the respective original color-separated images, onto the main pixel 621 of the pixel group 620 positioned at the first row and the second column in the first intermediate image.

Also, the intermediate image generation module 820 calculates luminance information based on color information in the pixel information of the pixels at identical positions in the respective original color-separated images, and maps the calculated luminance information onto the main pixel of each pixel group. For example, the intermediate image generation module 820 calculates luminance information based on the color information provided by the pixels positioned at the first row and the first column of the red, green, and blue images. Then, the calculated luminance information is mapped onto the main pixel of the pixel group positioned at the first row and the first column in the first intermediate image.

Referring to FIG. 10B, it can be seen that red (R), green (G), and blue (B) color information provided by the first through third sub sensing areas 510, 520, and 530, respectively, the luminance information (Y') provided by the fourth sub sensing area 540, and the luminance information (Y) detected from the 3 pieces of color information are mapped onto the main pixels of the respective pixel groups. For example, it can be seen that onto the main pixel 611 of the first pixel group 610, the red (R) color information of the pixel positioned at the first row and the first column of the red image 511, the green (G) color information of the pixel positioned at the first row and the first column of the green image 521, and the blue (B) color information of the pixel positioned at the first row and the first column of the blue image 531, the luminance information (Y') of the pixel positioned at the first row and the first column of the gray image 541, and the luminance information (Y) detected based on the 3 pieces of color information are mapped. Likewise, it can be seen that onto the main pixel 621 of the second pixel group 620, the red (R) color information of the pixel positioned at the first row and the second column of the red image 511, the green (G) color information of the pixel positioned at the first row and the second column of the green image 521, and the blue (B) color information of the pixel positioned at the first row and the second column of the blue image 531, the luminance information (Y') of the pixel positioned at the first row and the second column of the gray image 541, and the luminance information (Y) detected based on the already provided 3 pieces of color information are mapped.

Accordingly, the intermediate image generation module 820 generates a second intermediate image 600 in which 3 pieces of color information and 2 pieces of luminance information are mapped onto the main pixel of each pixel group in operation S842. Here, in the second intermediate image 600, because 3 pieces of color information are all mapped into the main pixels of the respective pixel groups, a demosaicing operation can be skipped in a subsequent process.

Then, by using an interpolation method, the intermediate image generation module 820 interpolates the second intermediate image in operation S843. That is, the intermediate image generation module 820 calculates pixel information to be recorded in each sub pixel, based on the information of the main pixels 611, 621, and 631 of the pixel groups 610, 620, and 630.

The intermediate image generation module 820 may interpolate the second intermediate image 600 according to a variety of algorithms. For example, the pixel information to be recorded in each sub pixel in the second intermediate image 600 may be calculated from the information held by the main pixel adjacent to the sub pixel. More specifically, in FIG. 10B, pixel information to be recorded in the sub pixel 612 positioned between the main pixel 611 of the first pixel group 610 and the main pixel 621 of the second pixel group 620 may be determined to be the mean value of the pixel information of the two main pixels 611 and 621. Likewise, pixel information to be recorded in the sub pixel 622 positioned between the main pixel 621 of the second pixel group 620 and the main pixel 631 of the third pixel group 630 may be determined to be the mean value of the pixel information of the two main pixels 621 and 631.

If the interpolation of the second intermediate image 600 is performed in this manner, the final image generation module 830 performs deblurring of the interpolated second intermediate image in operation S844. As a result, the final image 90 having a high resolution (that is, the sub sensing area's resolution × 4) is generated from the original color-separated images having a low resolution (that is, the resolution of the sub sensing area) obtained through each sub sensing area.

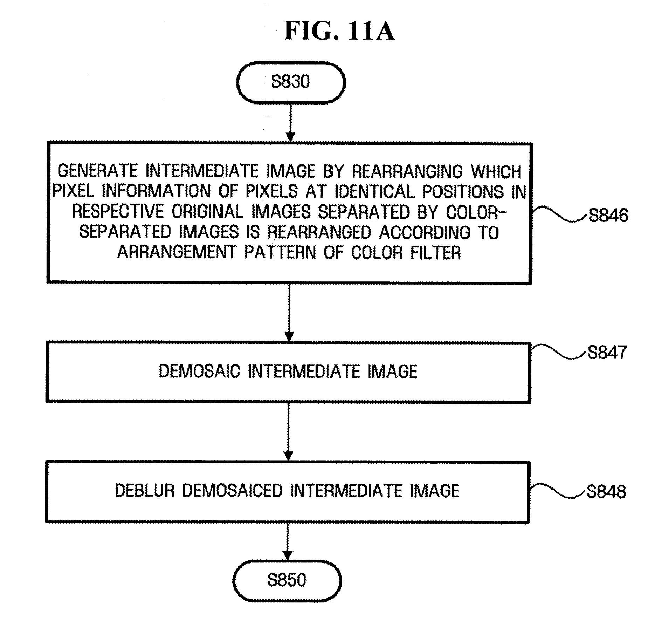

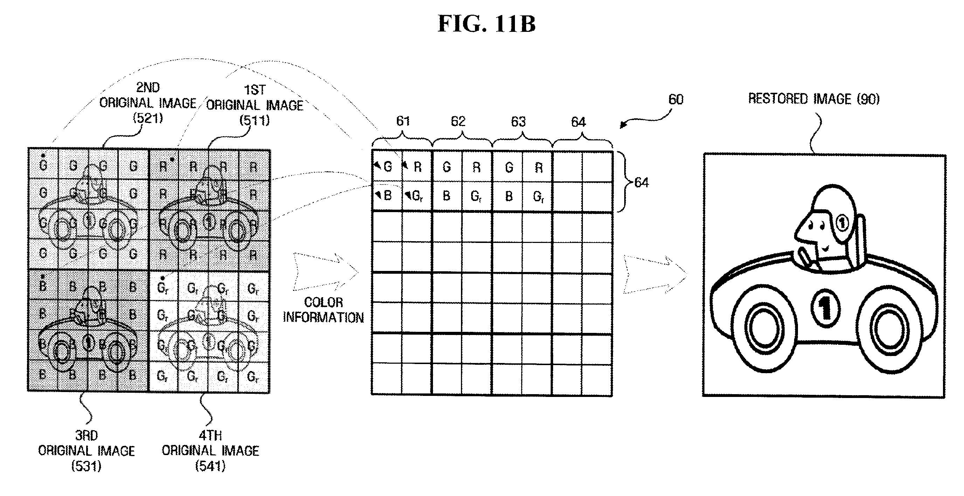

Next, the operation for generating the final image according to another embodiment of the present invention will be explained with reference to FIGS. 11A and 11 B. Here, FIG. 11A is a flowchart illustrating in more detail the operation of generating the final image according to the embodiment of the present invention, and FIG. 11 B illustrates operation S846 for rearranging pixel information of FIG. 11A.

If the plurality of the original images 511, 521, 531, and 541 are provided from the camera module 200, the intermediate image generation module 820 generates an intermediate image 60 by rearranging the pixel information of pixels at identical positions in the respective original images 511, 521, 531, and 541 according to the arrangement pattern of the color filter in operation S846.

The method of generating the final image according to this embodiment of the present invention can be applied to a case where a plurality of lenses of the lens unit 300 in the camera module 200 are positioned at positions shifted a predetermined number of pixels from the position of a predetermined lens. In the following, an explanation will be given assuming that from the position of the second lens, the first lens is shifted right one pixel, the third lens is shifted downward one pixel, and the fourth lens 340 is shifted diagonally one pixel, that is, each one pixel in the right and downward direction from the position of the predetermined lens.

More specifically, the intermediate image 60 can be divided into a plurality of pixel groups including a plurality of pixels corresponding to the arrangement pattern of the color filter. For example, if the pattern of the color filter formed in the filter unit 400 is a 1 × 4 matrix form, the intermediate image may be divided into a plurality of pixel groups, each group formed of 1 × 4 pixels (width × height). If the pattern of the color filter formed in the filter unit 400 is a 2 × 2 matrix form, the intermediate image may be divided into a plurality of pixel groups, each group formed of 2 × 2 pixels (width × height).

FIG. 11 B illustrates a case where a virtual image is divided into a plurality of pixel groups 61, 62, 63, and 64, each group being formed of 2 × 2 pixels (width × height).

Referring to FIG. 11 B, it can be seen that pixel information of pixels positioned at the first row and the first column of the respective original images 511, 521, 531 and 541 is mapped onto the pixel group 61 positioned at the first row and the first column of the intermediate image 60 according to the pattern of the color filter.

If the intermediate image 60 as illustrated in FIG. 11 B is generated, the intermediate image generation module 820 performs demosaicing of the intermediate image in operation S847. The demosaiced intermediate image is provided to the final image generation module 830.

Then, the final image generation module 830 performs deblurring of the demosaiced intermediate image in operation S848. As a result, the final image 90 having a high resolution (that is, the sub sensing area's resolution × 4) is generated from the original color-separated images having a low resolution (that is, the resolution of the sub sensing area) obtained through each sub sensing area.

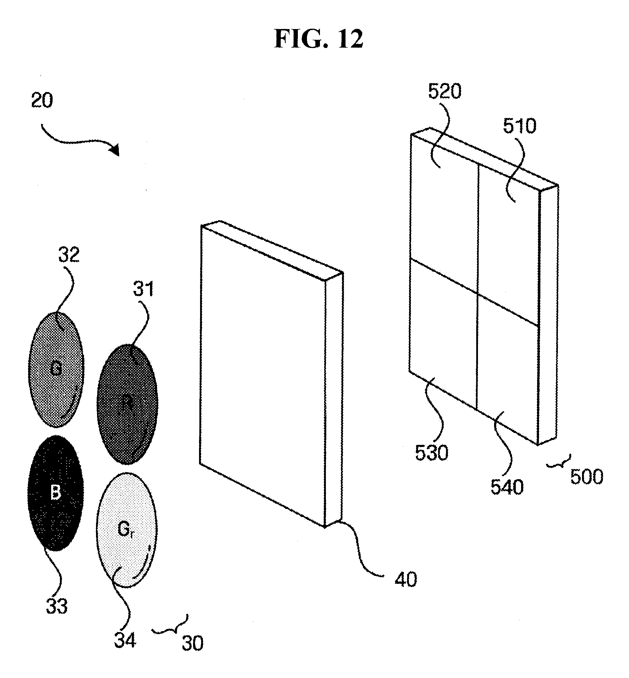

Next, a camera module 20 according to a second embodiment of the present invention will be explained. FIG. 12 is a perspective view of an internal structure of the camera module 20 according to the second embodiment of the present invention. The camera module 20 according to the second embodiment of the present invention has the same structure as that of the camera module 200 according to the first embodiment of the present invention of FIG. 3 except for the following characteristics.

That is, in the camera module 20 according to the second embodiment the plurality of lenses 31, 32, 33, and 34 forming a lens unit 30 having different colors from one another. Here, the lens unit 30 may be divided into a first group and a second group with respect to transmittance. The first group may include a plurality of lenses and the second group may include one lens.

Here, the lens 34 included in the second group may have a color having a higher transmittance than that of the lenses 31, 32, and 33 included in the first group. For example, if the first group includes a first lens 31 having a red color, a second lens 32 having a green color, and a third lens 33 having a blue color among the 4 lenses, a fourth lens 34 included in the second group may have a color having a higher transmittance than the transmittances of red, green and blue, for example, it may have gray color.

Thus, when the plurality of the lenses 31, 32, 33 and 34 have different colors, a separate color filter layer is not formed in the filter unit 40. An infrared ray blocking filter (not shown) may be selectively formed in the filter unit 40.

Also, the sensing area of the image sensor unit 500 is divided into a plurality of sub sensing areas 510, 520, 530 and 540 corresponding to the lenses 31, 32, 33 and 34, respectively. Original images 511, 521, 531, and 541 through respective lenses 31, 32, 33, and 34 can be obtained through respective sub sensing areas 510, 520, 530, and 540.

According to the method and apparatus for restoring an image as described above, one or more of the following effects can be obtained.

The method and apparatus provide an advantage that a high resolution image can be obtained with a miniaturized camera module.

A camera module can be miniaturized, thus a greater number of options are available when designing a digital device in which the camera module is mounted.

A color filter layer and a planarizing layer to planarize the color filter layer are not formed inside an image sensor, thus the interval between a micro lens and a photo detector becomes narrower such that the light loss and crosstalk caused by the thickness of the planarizing layer can be reduced.

Also, because the color filter is not formed on an image sensor but on a separate substrate, the manufacturing process of the image sensor can be simplified.

Since a process of patterning a color filter on an image sensor is omitted, ink used to form a color filter layer can be saved.

By using color filters having different transmittances, a high sensitivity sensing area and a low sensitivity sensing area can be implemented at the same time even without changing the structure of an image sensor unit.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of restoring an image comprising:
obtaining a plurality of original color-separated images through a camera module including a plurality of lenses and a plurality of image sensing areas corresponding to the lenses, respectively;
generating a first intermediate image corresponding to the sensing areas;
dividing the first intermediate image into a plurality of pixel groups;
generating a second intermediate image comprising mapping pixel information of pixels at identical positions in respective ones of the original color-separated images, onto a predetermined pixel of a pixel group in the first intermediate image corresponding to the respective identical position; and
generating a final image comparing interpolating the second intermediate image,
wherein each of the pixel groups comprises a plurality of pixels corresponding to an arrangement pattern of color filters.

2. The method of claim 1, wherein when positions of the plurality of original color-separated images are misaligned with designated positions of the respective sub sensing areas, the obtaining of the original images comprises correcting the misalignment in positions of the original color-separated images.

3. The method of claim 1, wherein when the plurality of original color-separated images have non-uniform sensitivity levels, the obtaining of the original images comprises correcting the non-uniformity in sensitivity of the original color-separated images based on a sensitivity of a particular original color-separated image among the plurality of original color-separated images, the particular original color-separated image having the lowest sensitivity level.

4. The method of claim 1, wherein the obtaining of the original images comprises:
concentrating incident light by using the plurality of lenses;
filtering the incident light through a plurality of filtering areas corresponding to the lenses, respectively, each filtering area having a different color filter formed therein; and
obtaining the original color-separated images through the image sensing areas, which are formed with a predetermined interval from the plurality of filtering areas and correspond to the filtering areas, respectively.

5. The method of claim 4, further comprising dividing the filtering areas into a first filtering area and a second filtering area with respect to transmittance of the respective color filter, and the transmittance of the color filter formed in the first filtering area is higher than that of the color filter formed in the second filtering area, and the image sensing areas are divided into a first sensing area and a second sensing area corresponding to the first filtering area and the second filtering area, respectively, and the quantity of light converging on a sub sensing area included in the first sensing area is larger than the quantity of light converging on a sub sensing area included in the second sensing area.

6. The method of claim 5, wherein the pixel information comprises luminance information provided by the sub sensing area included in the first sensing area and color information provided by the sub sensing area included in the second sensing area.

7. The method of claim 1, wherein the obtaining of the plurality of the original images comprises:
concentrating incident light by using the plurality of lenses, the plurality of lenses having different colors; and
obtaining the plurality of the original color-separated images through the plurality of the image sensing areas corresponding to the plurality of the lenses, respectively.

8. The method of claim 7, further comprising dividing the lenses into a first lens unit and a second lens unit with respect to transmittances of the lenses, and the transmittance of a lens include in the first lens unit is higher than that of a lens included in the second lens unit, and the sensing areas are divided into a first sensing area and a second sensing area corresponding to the first lens unit and the second lens unit, respectively, and a quantity of light converging on a sub sensing area included in the first sensing area is larger than a quantity of light converging on a sub sensing area included in the second sensing area.

9. The method of claim 8, wherein the pixel information comprises luminance information provided by the sub sensing area included in the first sensing area and color information provided by the sub sensing area included in the second sensing area.

10. The method of claim 1, wherein the plurality of lenses are positioned co-planarly.

11. A method of restoring an image comprising:
obtaining a plurality of original color-separated images through a camera module including a plurality of lenses and a plurality of image sensing areas corresponding to the lenses, respectively;
generating an intermediate image comprising rearranging pixel information of pixels at identical positions in the respective original color-separated images, according to an arrangement pattern of color filters of the camera module; and
generating a final image comprising demosaicing the intermediate image.

12. The method of claim 11, further comprising positioning the lenses other than a predetermined one of the lenses at positions shifted a predetermined number of pixels from a position of the predetermined lens.

13. The method of claim 11, wherein when the positions of the plurality of original color-separated images are misaligned with designated positions of respective sub sensing areas of the camera module, the obtaining of the original images comprises correcting the misalignment in positions of the original color-separated images.

14. The method of claim 11, wherein when the plurality of original color-separated images have non-uniform sensitivity levels, the obtaining of the original images comprises correcting the non-uniformity in sensitivity of the original color-separated images based on the sensitivity of a particular original color-separated image among the plurality of original color-separated images, the particular original color-separated image having the lowest sensitivity level.

15. The method of claim 11, wherein the obtaining of the plurality of original color-separated images comprises:
concentrating incident light comprising using the plurality of lenses;
filtering the incident light through a plurality of filtering areas corresponding to the areas of the lenses, respectively, with each filtering area having a different color filter formed therein; and
obtaining the original color-separated images through the image sensing areas, which are formed with a predetermined interval from the plurality of filtering areas and correspond to the filtering areas, respectively.

16. The method of claim 15, further comprising dividing the filtering areas into a first filtering area and a second filtering area with respect to transmittance of the respective color filters, and the transmittance of the color filter formed in the first filtering area is higher than that of the color filter formed in the second filtering area, and dividing the sensing areas into a first sensing area and a second sensing area corresponding to the first filtering area and the second filtering area, respectively, and a quantity of the incident light converging on a sub sensing area included in the first sensing area is larger than a quantity of the incident light converging on a sub sensing area included in the second sensing area.

17. The method of claim 16, wherein the pixel information comprises luminance information provided by the sub sensing area included in the first sensing area and color information provided by the sub sensing area included in the second sensing area.

18. The method of claim 11, wherein the obtaining of the plurality of the original images comprises:
concentrating incident light comprising using the plurality of lenses having different colors; and
obtaining the plurality of the original color-separated images through the plurality of the image sensing areas corresponding to the plurality of the lenses, respectively.

19. The method of claim 18, further comprising dividing the lenses are divided into a first lens unit and a second lens unit with respect to transmittances of the lenses, and the transmittance of the lens included in the first lens unit is higher than that of the lens included in the second lens unit, and the dividing the sensing areas into a first sensing area and a second sensing area corresponding to the first lens unit and the second lens unit, respectively, and a quantity of the light converging on a sub sensing area included in the first sensing area is larger than a quantity of the incident light converging on a sub sensing area included in the second sensing area.

20. The method of claim 19, wherein the pixel information comprises luminance information provided by the sub sensing area included in the first sensing area and color information provided by the sub sensing area included in the second sensing area.

21. The method of claim 11, further comprising arranging the plurality of lenses co-planarly.

22. An apparatus to restore an image comprising:
a camera module;
an input module receiving a plurality of original color-separated images obtained through the camera module, the camera module including a plurality of lenses and a plurality of image sensing areas corresponding to the lenses, respectively;
an intermediate image generation module generating a first intermediate image corresponding to the image sensing areas and divided into a plurality of pixel groups, and generating a second intermediate image by mapping pixel information of pixels at identical positions in respective original color-separated images, onto a predetermined one of the pixels of the pixel group in the first intermediate image corresponding to the identical positions;
a final image generation module generating a final image by interpolating the second intermediate image; and
a color filter,
wherein each of the pixel groups comprises a plurality of pixels corresponding to an arrangement pattern of color filter.

23. The apparatus of claim 22, wherein when the positions of the plurality of original color-separated images are misaligned with designated positions of the respective sub sensing areas of the image sensing areas, the input module corrects the misalignment in positions of the original color-separated images.

24. The apparatus of claim 22, wherein when the plurality of original color-separated images have non-uniform sensitivity levels, the input module corrects the non-uniformity in sensitivity of the original color-separated images based on a sensitivity of a particular one of the original color-separated images among the plurality of original color-separated images, the particular original color-separated image having the lowest sensitivity level.

25. The apparatus of claim 22, wherein the camera module further comprises:
a lens unit comprising the lenses, wherein the lenses concentrate incident light;
a filter unit filtering the incident light through a plurality of filtering areas corresponding to the plurality of the lenses, respectively, with each filtering area having a different color filter formed therein; and
an image sensor unit obtaining the original color-separated images through the image sensing areas, which are formed with a predetermined interval from the filtering areas and correspond to the filtering areas, respectively.

26. The apparatus of claim 25, wherein the filtering areas are divided into a first filtering area and a second filtering area with respect to transmittance of the respective color filter, and the transmittance of the color filter formed in the first filtering area is higher than that of the color filter formed in the second filtering area, and the sensing areas are divided into a first sensing area and a second sensing area corresponding to the first filtering area and the second filtering area, respectively, and a quantity of the incident light converging on a sub sensing area included in the first sensing area is larger than a quantity of the incident light converging on a sub sensing area included in the second sensing area.

27. The apparatus of claim 26, wherein the pixel information comprises luminance information provided by the sub sensing area included in the first sensing area and color information provided by the sub sensing area included in the second sensing area.

28. The apparatus of claim 22, wherein the camera module further comprises:
a lens unit comprising the lenses, wherein the lenses have different colors and concentrate incident light; and
an image sensor unit obtaining the original color-separated images through the image sensing areas corresponding to the areas of the lenses, respectively.

29. The apparatus of claim 28, wherein the lenses are divided into a first lens unit and a second lens unit with respect to transmittances of the lenses, and the transmittance of the lens included in the first lens unit is higher than that of the lens included in the second lens unit, and the sensing areas are divided into a first sensing area and a second sensing area corresponding to the first lens unit and the second lens unit, respectively, and a quantity of the incident light converging on the sub sensing area included in the first sensing area is larger than a quantity of the light converging on the sub sensing area included in the second sensing area.

30. The apparatus of claim 29, wherein the pixel information comprises luminance information provided by the sub sensing area included in the first sensing area and color information provided by the sub sensing area included in the second sensing area.

31. The apparatus of claim 22, wherein the plurality of lenses are arranged co-planarly.

32. An apparatus to restore an image comprising:
an input module receiving a plurality of original color-separated images through a camera module, the camera module including a plurality of lenses and a plurality of image sensing areas corresponding to the lenses, respectively;
color filters;
an image generation module generating an intermediate image by rearranging pixel information of pixels at identical positions in the respective original color-separated images, according to an arrangement pattern of the color filters; and
a final image generation module generating a final image by demosaicing the intermediate image.

33. The apparatus of claim 32, wherein among the plurality of lenses, the lenses other than a predetermined lens are positioned at positions shifted a predetermined number of pixels from the position of the predetermined lens.

34. The apparatus of claim 32, wherein when the positions of the plurality of original color-separated images are misaligned with designated positions of respective sub sensing areas of the image sensing areas, the input module corrects the misalignment in positions of the original images.

35. The apparatus of claim 32, wherein when the plurality of original color-separated images have non-uniform sensitivity levels, the input module corrects the non-uniformity in sensitivity of the original color-separated images based on a sensitivity of a particular one of the original color-separated images among the plurality of original color-separated images, the particular original color-separated image having the lowest sensitivity level.

36. The apparatus of claim 32, wherein the camera module further comprises:
a lens unit comprising the lenses, wherein the lenses concentrate incident light;
a filter unit filtering the incident light through a plurality of filtering areas corresponding to the plurality of the lenses, respectively, with each filtering area having a different color filter formed therein; and
an image sensor unit obtaining the original color-separated images through the image sensing areas, which are formed with a predetermined interval from the filtering areas and correspond to the filtering areas, respectively.

37. The apparatus of claim 36, wherein the filtering areas are divided into a first filtering area and a second filtering area with respect to transmittance of the respective color filters, and the transmittance of the color filter formed in the first filtering area is higher than that of the color filter formed in the second filtering area, and the sensing areas are divided into a first sensing area and a second sensing area corresponding to the first filtering area and the second filtering area, respectively, and a quantity of the incident light converging on a sub sensing area included in the first sensing area is larger than a quantity of the incident light converging on a sub sensing area included in the second sensing area.

38. The apparatus of claim 37, wherein the pixel information comprises luminance information provided by the sub sensing area included in the first sensing area and color information provided by the sub sensing area included in the second sensing area.

39. The apparatus of claim 32, wherein the camera module further comprises:
the plurality of lenses having different colors; and
an image sensor unit obtaining the plurality of the original color-separated images through the plurality of the image sensing areas corresponding to the plurality of the lenses, respectively.

40. The apparatus of claim 39, wherein the lenses are divided into a first lens unit and a second lens unit with respect to transmittances of the lenses, and the transmittance of the lens included in the first lens unit is higher than that of the lens included in the second lens unit, and the sensing areas are divided into a first sensing area and a second sensing area corresponding to the first lens unit and the second lens unit, respectively, and a quantity of the incident light converging on a sub sensing area included in the first sensing area is larger than a quantity of the incident light converging on a sub sensing area included in the second sensing area.

41. The apparatus of claim 40, wherein the pixel information comprises luminance information provided by the sub sensing area included in the first sensing area and color information provided by the sub sensing area included in the second sensing area.

42. The apparatus of claim 32, wherein the plurality of lenses are arranged co-planarly.
